# EUROPÄISCHE PATENTSCHRIFT

(11) **EP 1 336 567 B1**
(45) Veröffentlichungstag und Bekanntmachung des Hinweises auf die Patenterteilung: **14.09.2005**
(21) Anmeldenummer: 02027368.6
(22) Anmeldetag: 07.12.2002
(51) Int. Cl.: B65B 43/46, B65G 17/32

(54) **Vorrichtung zum automatischen Verschliessen von zugeführten Behältern**
Apparatus for automatically closing conveyed containers
Installation pour la fermeture automatique de récipients transportés

(30) Priorität: 16.02.2002 DE 10206460
(43) Veröffentlichungstag der Anmeldung: 20.08.2003
(73) Patentinhaber: Jörg von Seggern GmbH, 26133 Oldenburg (DE)
(72) Erfinder: von Seggern, Jörg, 26133 Oldenburg (DE)
(74) Vertreter: Jabbusch, Matthias

(56) Entgegenhaltungen:
- EP-A- 0 570 880
- FR-A- 2 681 835
- US-A- 5 511 651

## Beschreibung

Die Erfindung betrifft eine Vorrichtung zum automatischen Verschließen von der Vorrichtung zugeführten Behältern, umfassend zumindestens eine Verschlußeinrichtung für die Behälter und umfassend zumindestens eine Zuführeinrichtung, welche die Behälter der Verschlußeinrichtung zuführt, wobei die Zuführeinrichtung zumindestens ein Transportelement zum Überführen zumindestens eines Behälters zu der Verschlußeinrichtung hat.

Vorrichtungen der eingangs genannten Gattung werden eingesetzt, um Behälter automatisch zu verschließen. Bei diesen Behältern kann es sich beispielsweise um schalenförmige oder becherförmige Behälter handeln, die mit Kunststoffolien oder mit Metallfolien verschlossen werden.

Insbesondere bei der Verpackung von Lebensmitteln, wie Fertiggerichten, werden schalenförmige Behälter z. B. aus Kunststoff automatisch mit dem Lebensmittel bzw. mit mehreren Lebensmitteln befüllt und anschließend automatisch verschlossen. Die Behälter werden dabei den einzelnen Stationen, beispielsweise einer Befüllungsstation und einer Verschlußeinrichtung, mechanisch und automatisch zugeführt.

Für die Zuführung der Behälter weisen bekannte Vorrichtungen beispielsweise Förderbänder auf. Diese führen die Behälter bis zu einem bestimmten Abstand an die Verschlußeinrichtung heran. Zur Überführung der Behälter in die Verschlußeinrichtung, in der die Behälter z. B. mit einer Kunststoffolie oder mit einer Metallfolie verschlossen werden, dient das zumindestens eine Transportelement.

Als Transportelemente werden bei bekannten Vorrichtungen z. B. Schwenkarme eingesetzt, die etwa im rechten Winkel zur Förderungsrichtung der Behälter an diese herangeführt werden. Nach dem Heranführen werden mit den Schwenkarmen die Behälter in die Verschlußeinrichtung eingestellt und dort verschlossen.

Durch das seitliche Heranführen der die Transportelemente ausbildenden Schwenkarme erfolgt ein etwa formschlüssiges Anlegen der Schwenkarme an die Behälter. Damit ist eine formschlüssige Verbindung zwischen Transportelementen und Behältern hergestellt, die bei einem Überführen eines einzelnen Behälters oder mehrerer in einer Reihe befindlicher Behälter zu einem relativ problemlosen Einstellen der Behälter in die Verschlußeinrichtung führt.

Problematisch ist dabei jedoch der Fall, daß in zwei oder mehr Reihen nebeneinander angeordnete Behälter gehandhabt werden sollen. Durch das lediglich seitliche Heranführen der Transportelemente wird bei dieser Behälteranordnung ein Verklemmen der Behälter gegeneinander erreicht. Dieses Verklemmen ist jedoch nicht derart stark ausgebildet, daß die Behälter sich nicht mehr gegeneinander bewegen, insbesondere verschieben, können. Ein zu starkes Verklemmen würde nämlich zu einem Verbiegen bzw. Zerstören der oft dünnwandigen Behälter führen.

Aufgrund des lockeren Klemmens besteht aber die Gefahr, daß sich die Behälter gegeneinander verschieben oder verlagern können und dadurch insbesondere bei einem Transport der Behälter Verwerfungen in ihren Positionen auftreten können. Die Verwerfungen bzw. Verschiebungen der Behälter können zu einer Verklemmung der Transportelemente führen mit der negativen Folge, daß der gesamte Verschließungsprozeß, der unter Umständen auch mit dem Befüllungsprozeß der Behälter verknüpft ist, anzuhalten ist. Manuelle Eingriffe sind erforderlich, um aufgetretene Verklemmungen aufheben zu können.

Der Erfindung liegt die Aufgabe zugrunde, eine Vorrichtung der eingangs genannten Gattung aufzuzeigen, die eine sichere Handhabung von in wenigstens zwei Reihen angeordneten Behältern ermöglicht.

Diese Aufgabe ist erfindungsgemäß dadurch gelöst, daß das wenigstens eine Transportelement mit zumindestens einem Greiforgan zum kraftschlüssigen Ergreifen wenigstens eines Behälters ausgerüstet ist.

Bei der erfindungsgemäßen Vorrichtung wird durch ein Transportelement oder werden durch mehrere Transportelemente der bzw. die Behälter nicht lediglich formschlüssig in Anlage gebracht, sondern es findet erfindungsgemäß ein kraftschlüssiges Ergreifen statt. Zu diesem kraftschlüssigen Ergreifen dient das Greiforgan.

Durch das Ergreifen ist eine ganz sichere Überführung des wenigstens einen Behälters in die Verschlußeinrichtung ermöglicht. Dabei ist vorteilhaft auch ermöglicht, mehrere in Reihen zueinander angeordnete Behälter vorzugsweise aus einander entgegengesetzten Richtungen kraftschlüssig zu ergreifen und unter Beibehalten dieses kraftschlüssigen Ergreifens in die Verschlußeinrichtung zu überführen. Weil jeder Behälter dabei kraftschlüssig und somit sicher ergriffen ist, kann eine Lageveränderung eines Behälters zu einem anderen Behälter nicht mehr auftreten, so daß vorteilhaft Verschiebungen und Verwerfungen, die zu einem Stillstand der Überführungsbewegung führen, nicht mehr auftreten.

Durch das kraftschlüssige Ergreifen der Behälter ist zudem ermöglicht, die Behälter während ihres Einbringens in die Verschlußeinrichtung von einer Aufstellfläche abzuheben. Der Kraftschluß während des Ergreifens kann dabei so ausgebildet sein, daß ein noch offener Behälter in einer horizontalen Lage gehalten wird, so daß ein Behälterinhalt nicht aus dem Behälter austreten bzw. auslaufen kann. Das Anheben der Behälter während des Einbringens in die Verschlußeinrichtung hat den Vorteil, daß ein Überwinden von Hindernissen, beispielsweise von verschiedenen Höhen aneinanderstoßender Flächen oder Kanten, möglich ist.

Nach einer ersten Weiterbildung der Erfindung ist vorgesehen, daß das Greiforgan wenigstens zwei zueinander lageveränderbare Greifarme hat, welche aus etwa entgegengesetzten Richtungen an wenigstens einen Abschnitt zumindestens eines Behälters kraftschlüssig anlegbar sind. Durch das kraftschlüssige Anlegen der Greifarme wird das Ergreifen der Behälter durch das Greiforgan sichergestellt. Das Greiforgan weist dabei beispielsweise zwei zueinander lageveränderbare Greifarme auf, die nach Art einer Zange oder zweier Backen aus einander entgegengesetzten Richtungen an einen Abschnitt des Behälters, beispielsweise an einen vorstehenden Behälterrand, anlegbar sind. Das Ergreifen erfolgt somit in einer Griffbewegung dieser Greifarme.

Zum Lageverändern wenigstens eines der beiden Greifarme jedes Greiforgans relativ zum anderen Greifarm ist zumindestens ein Bewegungsmittel vorgesehen. Dieses Bewegungsmittel ist dem Greiforgan zugeordnet und ermöglicht seine vorzugsweise automatisierte Betätigung. Als Bewegungsmittel werden beispielsweise Pneumatikzylinder oder Hydraulikzylinder eingesetzt, wobei einem Greiforgan ein oder mehrere dieser Bewegungsmittel zugeordnet sein können.

Das kraftschlüssige Anlegen der Greifarme jedes Greiforgans an einen Abschnitt eines Behälters kann durch eine formschlüssige Ausgestaltung der Greifarme in Bezug auf die Bauform bestimmter Abschnitte der Behälter angepaßt sein. So ist nach einer Weiterbildung der Erfindung vorgesehen, daß zumindestens einer der Greifarme in einem Abschnitt seiner Oberfläche eine Oberflächengestaltung aufweist, welche an die Oberflächengestaltung des zugeordneten Abschnittes des Behälters derart angepaßt ist, daß eine formflüssige Anlage dieser Abschnitte aneinander erfolgt. Durch den zusätzlichen Formschluß wird das sichere Ergreifen des Behälters durch ein Greiforgan unterstützt. Die Kräfte, die das Greiforgan aufzubringen hat, können reduziert werden, ohne daß ein sicheres Ergreifen des Behälters aufgegeben wird.

Ein Greifarm weist vorzugsweise zumindestens in einem Abschnitt seiner Oberfläche eine nutförmige Vertiefung auf, in welche ein Randabschnitt eines Behälters einlegbar ist. Behälter für Lebensmittel weisen oftmals einen umgebogenen oberen Rand auf. Dieser kann formschlüssig in eine nutförmige Vertiefung eingelegt werden, wobei diese das lagesichere Greifen des Behälters und Führen des Behälters während seines Einbringens in die Verschlußeinrichtung unterstützt. Andere entsprechende Oberflächenausgestaltungen von Behälter und zugeordneten Abschnitten der Greifarme sind möglich.

Um bei dem Verschließen voneinander verschiedener Behälter durch die erfindungsgemäße Vorrichtung eine einfache Umrüstung der Vorrichtung vornehmen zu können, ist vorgesehen, daß die Greifarme in einfacher Weise von der Vorrichtung abnehmbar sind. So können jeweils an die zu verschließenden Behälter angepaßte Greifarme in die Vorrichtung eingesetzt werden.

Die zu verschließenden Behälter können unmittelbar vor der Verschlußeinrichtung beispielsweise manuell für das Transportelement zum Einführen in die Verschlußeinrichtung bereitgestellt werden. Vorzugsweise ist jedoch vorgesehen, daß die Zuführeinrichtung neben dem Transportelement noch wenigstens eine Förderstrecke zum Heranführen der Behälter an die Verschlußeinrichtung aufweist. Die Förderstrecke ist beispielsweise durch einen Linearförderer oder durch ein Förderband ausgebildet. Sie führt die zu verschließenden Behälter, die gegebenenfalls im Verlauf der Förderstrecke befüllt werden, an die Verschlußeinrichtung heran. Am Förderungsende der Förderstrecke werden die Behälter von dem Transportelement übernommen und in die Verschlußeinrichtung eingebracht.

Nach einer bevorzugten Weiterbildung der Erfindung ist vorgesehen, daß die Zuführeinrichtung zwei aus einander entgegengesetzten Richtungen an die wenigstens in einer Reihe zugeführten Behälter annäherbare Transportelemente aufweist. Die Transportelemente werden von zwei Seiten an die Behälter herangeführt, jedes Transportelement ist dabei mit wenigstens einem Greiforgan mit wenigstens zwei Greifarmen ausgerüstet, die zum Ergreifen der Behälter geeignet sind. Vorzugsweise sind die Behälter in zwei Reihen angeordnet und werden die Behälter jeder Reihe von einem Greiforgan des an die Behälter annäherbaren Transportelementes ergriffen.

Dabei weist jedes Transportelement beispielsweise eine Baulänge auf, welche größer als wenigstens die zweifache Länge der Behälter ist. Dadurch ist sichergestellt, daß gleichzeitig jeweils mehrere Behälter ein und derselben zugeführten Behälterreihe in die Verschlußeinrichtung einbringbar sind.

Durch das Behandeln von in wenigstens zwei Reihen angeordneten Behältern wird eine wesentliche Beschleunigung des Verschließens der Behälter erreicht. Gegenüber einer Verschlußeinrichtung, die lediglich in einer Reihe angeordnete Behälter verschließen kann, wird die Menge der pro Zeitintervall verschlossenen Behälter verdoppelt. Dabei sind bei der erfindungsgemäßen Vorrichtung aufgrund der vorgesehenen Baulänge jedes Transportelementes gleichzeitig mehrere Behälter in die Verschlußeinrichtung einbringbar und von dieser gegebenenfalls verschließbar, so daß eine weitere Erhöhung der Menge der pro Zeitintervall verschlossenen Behälter erreicht ist.

Ein Ausführungsbeispiel der Erfindung, aus dem sich wietere erfinderische Merkmale ergeben, ist in der Zeichnung dargestellt. Es zeigen:
- Fig. 1:: eine perspektivische Ansicht eines Teils einer Vorrichtung zum automatischen Verschließen von der Vorrichtung zugeführten Behältern,
- Fig. 2 und 3:: Schnittansichten des Teils der Vorrichtung gemäß Fig. 1 und
- Fig. 4:: eine Schnittansicht eines Bauteils der Vorrichtung gemäß Fig. 1.

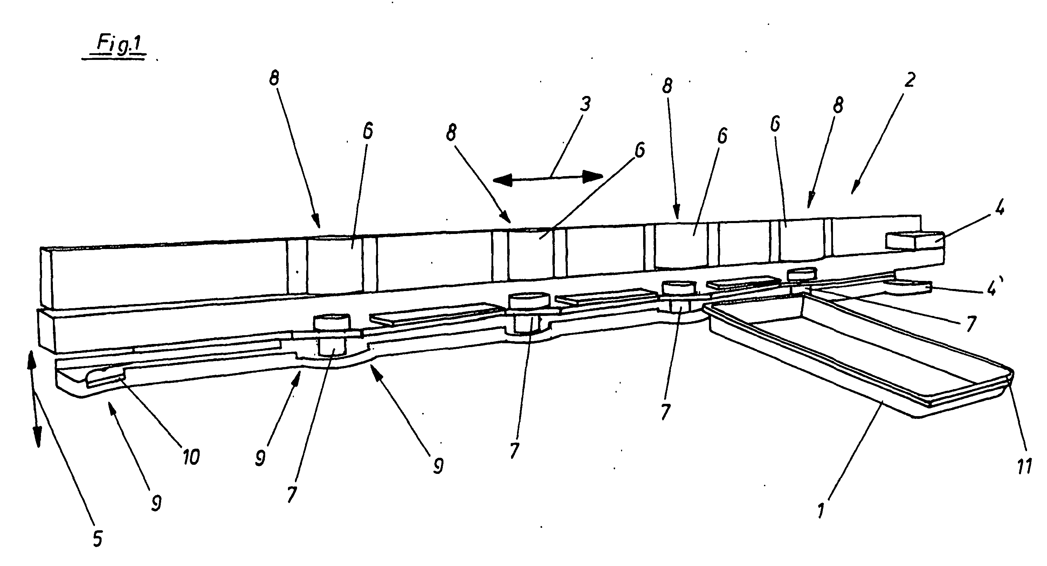

In Fig. 1 ist ein schalenförmiger Behälter 1 gezeigt, der von einem Greiforgan 2 der Vorrichtung ergriffen wird.

Das Greiforgan 2 ist Teil einer Vorrichtung, deren weitere Bestandteile nicht dargestellt sind. Das Greiforgan 2 ist insbesondere über entsprechende Vorrichtungsabschnitte gehalten. Dabei ist das Greiforgan 2 durch nicht weiter dargestellte Antriebsmittel entlang des Doppelpfeils 3 lageveränderbar. Diese Lageveränderung dient dem Transport eines von dem Greiforgan 2 ergriffenen Behälters 1 zu einer Verschlußeinrichtung.

Das Greiforgan 2 weist zwei jeweils als Profile ausgebildete Greifarme 4, 4' auf. Mit diesen können fünf Behälter 1 gleichzeitig ergriffen und transportiert werden.

Die Greifarme 4, 4' sind miteinander über Bewegungsmittel verbunden. Diese Bewegungsmittel 8 ermöglichen eine Lageveränderung des Greifarms 4' entlang des Pfeils 5. Die Bewegungsmittel 8 umfassen einstückig mit dem Greifarm 4 verbundene Zylinder 6, in denen Kolben 7 geführt sind. An den freien Enden dieser Kolben 7 ist der Greifarm 4' angeordnet. Durch ein Verschieben der Kolben 7 in den Zylindern 6 ist eine Annäherung des Greifarms 4' an den Greifarm 4 durchführbar, während der zwischen den Greifarmen 4, 4' der Behälter 1 kraftschlüssig ergriffen und geklemmt wird.

Um dieses kraftschlüssige Ergreifen noch lagesicherer ausgestalten zu können, sind in die Oberfläche des Greifarms 4' Oberflächengestaltungen 9 eingebracht. Die Oberflächengestaltungen 9 umfassen jeweils eine Nut 10, in die der umgelegte Rand 11 des Behälters 1 abschnittsweise eingelegt wird.

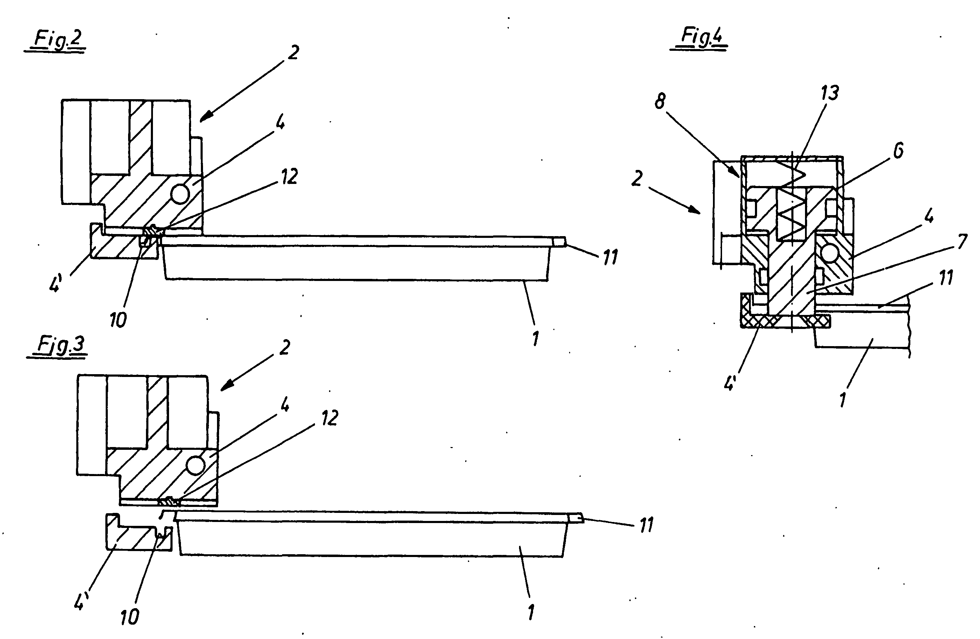

Fig. 2 und 3 zeigen die voneinander verschiedenen Lagezustände des Greifarms 4'. In Fig. 3 befindet sich der Greifarm 4' in einer Ruhelage, in der er von dem Greifarm 4 in einem Abstand angeordnet ist. In dieser Lage ist der Behälter 1 mit seinem Rand 11 formschlüssig in die Nut 10 einlegbar.

An der dem Greifer 4' zugekehrten Seite des Greifers 4 ist ein Klemmstück 12 angeordnet. Gegen dieses Klemmstück 12 wird der Rand 11 des Behälters 1 mit dem Greifarm 4' geführt, wie in Fig. 2 dargestellt. Es erfolgt eine kraftschlüssige Festlegung des Behälters 1 zwischen beiden Greifarmen 4, 4'.

Fig. 4 zeigt noch, daß der Greifarm 4', der als Klemmleistenprofil ausgebildet ist, mit Schrauben am freien Ende des Kolbens 7 befestigt ist. Der Kolben 7 wird im Inneren des Zylinders 6 pneumatisch beaufschlagt. In den Kolben 7 ist eine Rückstellfeder 13 eingesetzt, die sich an der oberen Abdeckung des Zylinders 6 abstützt. Während einer pneumatischen Beaufschlagung des Zylinderinneren wird der Kolben 7 angehoben und dadurch der Greifarm 4' gegen den Greifarm 4 geführt. Wird der pneumatische Druck abgebaut, führt die Rückstellfeder 13 den Kolben 7 wieder in die untere, in Fig. 3 gezeigte Ruhelage zurück, so daß ein ergriffener Behälter 1 wieder freigegeben wird.

## Patentansprüche

1. Vorrichtung zum automatischen Verschließen von der Vorrichtung zugeführten Behältern, umfassend zumindestens eine Verschlußeinrichtung für die Behälter und umfassend zumindestens eine Zuführeinrichtung, welche die Behälter der Verschlußeinrichtung zuführt, wobei die Zuführeinrichtung zumindestens ein Transportelement zum Überführen zumindestens eines Behälters zu der Verschlußeinrichtung hat,
**dadurch gekennzeichnet,**
**daß** das Transportelement mit wenigstens einem Greiforgan (2) zum kraftschlüssigen Ergreifen zumindestens eines Behälters (1) ausgerüstet ist.

2. Vorrichtung nach Anspruch 1, **dadurch gekennzeichnet, daß** das Greiforgan 2) wenigstens zwei zueinander lageveränderbare Greifarme (4, 4') hat, welche aus etwa entgegengesetzten Richtungen an wenigstens einen Abschnitt zumindestens eines Behälters (1) kraftschlüssig anlegbar sind.

3. Vorrichtung nach Anspruch 2, **dadurch gekennzeichnet, daß** dem Greiforgan (2) zum Lageverändern wenigstens eines Greifarmes (4') relativ zum anderen Greifarm (4) zumindestens ein Bewegungsmittel (8) zugeordnet ist.

4. Vorrichtung nach Anspruch 3, **dadurch gekennzeichnet, daß** das Bewegungsmittel (8) einen Hydraulikzylinder umfaßt.

5. Vorrichtung nach Anspruch 3, **dadurch gekennzeichnet, daß** das Bewegungsmittel (8) einen Pneumatikzylinder (6) umfaßt.

6. Vorrichtung nach einem der Ansprüche 2 bis 5, **dadurch gekennzeichnet, daß** zumindestens einer der Greifarme (4, 4') in einem Abschnitt seiner Oberfläche eine Oberflächengestaltung (9) aufweist, welche an die Oberflächengestaltung des zugeordneten Anlageabschnittes des Behälters (1) derart angepaßt ist, daß eine enge formschlüssige Anlage dieser Abschnitte aneinander erfolgt.

7. Vorrichtung nach Anspruch 6, **dadurch gekennzeichnet, daß** ein Greifarm (4') zumindestens in einem Abschnitt seiner Oberfläche als Oberflächengestaltung (9) eine nutförmige Vertiefung (10) hat, in welche ein Randabschnitt (11) eines Behälters (1) einlegbar ist.

8. Vorrichtung nach einem der vorhergehenden Ansprüche, **dadurch gekennzeichnet, daß** die Greifarme (4, 4') von der Vorrichtung abnehmbar sind.

9. Vorrichtung nach einem der vorhergehenden Ansprüche, **dadurch gekennzeichnet, daß** die Zuführeinrichtung wenigstens eine Förderstrecke zum Heranführen der Behälter (1) an die Verschlußeinrichtung hat.

10. Vorrichtung nach einem der vorhergehenden Ansprüche, **dadurch gekennzeichnet, daß** die Zuführeinrichtung zwei aus einander entgegengesetzten Richtungen an die in wenigstens in einer Reihe zugeführten Behälter (1) annäherbare Transportelemente aufweist.

11. Vorrichtung nach einem der vorhergehenden Ansprüche, **dadurch gekennzeichnet, daß** jedes Transportelement eine Baulänge aufweist, welche größer als wenigstens die zweifache Länge der Behälter (1) ist.

## Claims

1. An apparatus for automatically closing containers supplied to said apparatus, said apparatus comprising at least one closing mechanism for closing the containers and comprising at least one feeding mechanism for supplying the containers to the closing mechanism, said feeding mechanism having at least one conveyor element for conveying at least one container to the closing mechanism,
**characterized in**
**that** the conveyor element is equipped with at least one gripper member (2) for frictionally grasping at least one container (1).

2. The apparatus as set forth in claim 1, **characterized in that** the gripper member (2) has at least two gripper arms (4, 4') the relative position of which can be changed and which can be frictionally applied from approximately opposite directions onto at least one portion of at least one container (1).

3. The apparatus as set forth in claim 2, **characterized in that** at least one moving means (8) is associated with the gripper member (2) for changing the relative position of at least one gripper arm (4') with respect to the other gripper arm (4).

4. The apparatus as set forth in claim 3, **characterized in that** the moving means (8) includes a hydraulic cylinder.

5. The apparatus as set forth in claim 3, **characterized in that** the moving means (8) includes a pneumatic cylinder (6).

6. The apparatus as set forth in any of the claims 2 through 5, **characterized in that** at least one of the gripper arms (4, 4') comprises a surface feature (9) in a portion of its surface, said surface feature conforming to the surface feature of the associated contacting portion of the container (1) so as to provide a tight form-positive fit with said contacting portion.

7. The apparatus as set forth in claim 6, **characterized in that** a gripper arm (4') has, at least in a portion of its surface, a surface feature (9) in the form of a groove-shaped depression (10) for receiving a rim portion (11) of a container (1).

8. The apparatus as set forth in any of the afore mentioned claims, **characterized in that** the gripper arms (4, 4') may be removed from the apparatus.

9. The apparatus as set forth in any of the afore mentioned claims, **characterized in that** the feeding mechanism has at least one conveying path for conveying the containers (1) toward the closing mechanism.

10. The apparatus as set forth in any of the afore mentioned claims, **characterized in that** the feeding mechanism comprises two conveyor elements that are adapted to be approximated from opposite directions to the containers (1) which are supplied in at least one row.

11. The apparatus as set forth in any of the afore mentioned claims, **characterized in that** each conveyor element comprises an overall length that is more than at least twice the length of the container (1).

## Revendications

1. Dispositif destiné à fermer automatiquement des contenants acheminés vers celui-ci du type comprenant au moins un mécanisme de fermeture pour les contenants et comprenant au moins un mécanisme d'acheminement destiné à acheminer les contenants vers le mécanisme de fermeture, le mécanisme d'acheminement ayant au moins un élément de transport pour convoyer au moins un contenant jusqu'au mécanisme de fermeture,
**caractérisé en ce**
**que** l'élément de transport est équipé d'au moins un organe de préhension (2) destiné à saisir par adhérence au moins un contenant (1).

2. Dispositif selon la revendication 1, **caractérisé en ce que** l'organe de préhension (2) a au moins deux bras de préhension (4, 4') aptes à être déplacés l'un par rapport à l'autre et adaptés pour être appliqués par adhérence, depuis deux directions à peu près opposées, sur au moins une portion d'au moins un contenant (1).

3. Dispositif selon la revendication 2, **caractérisé en ce qu'**au moins un moyen de déplacement (8) est associé à l'organe de préhension (2) pour déplacer au moins un bras de préhension (4') par rapport à l'autre bras de préhension (4).

4. Dispositif selon la revendication 3, **caractérisé en ce que** le moyen de déplacement (8) comprend un cylindre hydraulique.

5. Dispositif selon la revendication 3, **caractérisé en ce que** le moyen de déplacement (8) comprend un cylindre pneumatique (6).

6. Dispositif selon l'une quelconque des revendications 2 à 5, **caractérisé en ce qu'**au moins un des bras de préhension (4, 4') comporte dans une portion de sa surface une structure de surface (9) qui est conjuguée de la structure de surface de la portion du contenant (1) destinée à venir se placer au contact avec elle de sorte que ces portions coopèrent en appui serré par coopération de formes.

7. Dispositif selon la revendication 6, **caractérisé en ce qu'**un bras de préhension (4') a dans au moins une portion de sa surface une structure de surface (9) en creux en forme de rainure (10) destinée à recevoir une partie du bord (11) d'un contenant (1).

8. Dispositif selon l'une quelconque des revendications précédentes, **caractérisé en ce que** les bras de préhension (4, 4') sont adaptés pour être démontés du dispositif.

9. Dispositif selon l'une quelconque des revendications précédentes, **caractérisé en ce que** le mécanisme d'acheminement a au moins un chemin de convoyage pour conduire les contenants (1) jusqu'au mécanisme de fermeture.

10. Dispositif selon l'une quelconque des revendications précédentes, **caractérisé en ce que** le mécanisme d'acheminement comporte deux éléments de transport aptes à être rapprochés depuis deux directions opposées des contenants (1) acheminés en au moins une rangée.

11. Dispositif selon l'une quelconque des revendications précédentes, **caractérisé en ce que** chaque élément de transport a une longueur totale supérieure à au moins deux fois la longueur du contenant (1).
